# EUROPÄISCHE PATENTSCHRIFT

(11) **EP 1 002 203 B1**
(45) Veröffentlichungstag und Bekanntmachung des Hinweises auf die Patenterteilung: **18.07.2001**
(21) Anmeldenummer: 99932656.4
(22) Anmeldetag: 06.05.1999
(51) Int. Cl.: F16H 1/00

(54) **PLANETENZAHNRADGETRIEBE FÜR HOHE DREHZAHLEN UND ZU ÜBERTRAGENDE NIEDRIGE DREHMOMENTE**
PLANETARY TOOTHED GEARING FOR HIGH ROTATIONAL SPEEDS AND LOW TORQUES FOR TRANSMITTING
TRANSMISSION A ENGRENAGES PLANETAIRES POUR REGIMES ELEVES ET COUPLES REDUITS A TRANSMETTRE

(30) Priorität: 15.05.1998 DE 19821813
(43) Veröffentlichungstag der Anmeldung: 24.05.2000
(73) Patentinhaber: Alpha Getriebebau GmbH, D-97999 Igersheim (DE)
(72) Erfinder: BAYER, Thomas, D-97999 Igersheim (DE)
(74) Vertreter: Patentanwalts-Partnerschaft Rotermund + Pfusch
(86) Internationale Anmeldenummer: DE9901381
(87) Internationale Veröffentlichungsnummer: WO9960287

(56) Entgegenhaltungen:
- DE-A- 4 111 570
- DE-A- 19 611 605
- DE-C- 4 036 209
- US-A- 5 288 556
- SAUER, RAINER: "Gleiten ohne Schmieren" WERKSTOFFTECHNIK,Oktober 1997 (1997-10), Seiten 50-52, XP002120266 in der Anmeldung erwähnt

## Beschreibung

Die Erfindung betrifft ein Planetenzahnradgetriebe mit den Merkmalen a) und f) des Patentanspruchs 1.

Ein derartiges Getriebe ist aus DE 40 36 209 C1 bekannt. Zur Erzielung einer dauerbetriebsfesten Dichtung des Getriebeinnenraumes werden bei jenem bekannten Getriebe Labyrinthdichtungen eingesetzt. Die Schmierung der Zahnräder erfolgt durch in dem Getriebegehäuse vorgesehenes Schmieröl, das in einer derart geringen Menge eingesetzt wird, das ein sich in dem Gehäuseinneren bildender Schmierölsumpf stets sicher unterhalb der Labyrinthdichtungen zu liegen kommt. Hierdurch wird vermieden, daß Schmieröl die Labyrinthdichtungen zum Getriebeäußeren hin durchdringen kann. Die Labyrinthdichtungen sowie eine geringe Schmierölmenge dienen dem Zweck, einer Erwärmung des Getriebes während dessen Dauerbetriebes entgegenzuwirken. In beiden Fällen geschieht dies durch eine Reibungsverminderung, die bei den Labyrinthdichtungen durch fehlende Gleitflächen und bei dem Schmieröl durch ein kleines Schmieröl-Planschvolumen erreicht wird.

Aus der Veröffentlichung Sauer, Rainer "Gleiten ohne Schmieren" in "Der Konstrukteur", 1997, Nr. 10, S. 50, 52 sind verschleißvermindernde Beschichtungen von Zahnrädern bekannt. Derartige Beschichtungen werden dort insbesondere für Getriebe empfohlen, die anwendungsbedingt schmierstofffrei arbeiten müssen sowie für Getriebe, bei denen durch das Verschleißverhalten der Zahnräder insbesondere bei ungewolltem Schmiermittelausfall noch gute Notlaufeigenschaften sichergestellt sein sollen.

Die Erfindung beschäftigt sich mit dem Problem, ein spielarmes, für einen langen, wartungsfreien Dauerbetrieb geeignetes Planetenzahnradgetriebe mit den Merkmalen a) und f) des Patentanspruchs 1 zu schaffen, bei dem der Dauerbetrieb vor allem bei hohen Drehzahlen und zu übertragenden niedrigen Drehmomenten sicher gewährleistet ist. Ein besonderes Augenmerk richtet die Erfindung dabei auf die Problematik, die sich bei einem Dauerbetrieb eines solchen Getriebes durch vorzeitig ausfallende Dichtungen ergibt, durch die der Getriebeinnenraum nach außen gedichtet wird.

Gelöst wird dieses Problem durch ein Planetenzahnradgetriebe mit sämtlichen Merkmalen des Patentanspruchs 1.

Durch die erfindungsgemäße Beschichtung der Zahnflanken der Getrieberäder kann überraschenderweise auch bei einem auf einen Dauerbetrieb mit hohen Drehzahlen ausgelegten Getriebe ein wartungsfreier Betrieb über die gesamte Betriebszeit sichergestellt werden. Die hierdurch erreichbaren Dauerbetriebszeiten liegen bei mehreren 100 Stunden und gehen insbesondere nach oben bis zu Dauerbetriebszeiten von über 30.000 Stunden.

Wegen vorzeitig ausfallender, den Getriebeinnenraum nach außen dichtender Gleitdichtungen waren bisher derartig hohe Dauerbetriebszeiten wartungsfrei nicht zu erreichen. Der vorzeitige Ausfall der Gleitdichtungen beruhte bei den vorbekannten Ausführungen auf einer jeweils zu hohen Wärmebelastung dieser Dichtungen.

Zweckmäßige Ausgestaltung der Erfindung sind Gegenstand der Unteransprüche, auf die bei der Beschreibung eines Ausführungsbeispieles noch näher eingegangen wird.

Die Erfindung beruht in erster Linie auf dem allgemeinen Gedanken, auf die bisher übliche Flüssigkeitsschmierung der Getrieberäder wie sie dem Prinzip nach auch noch bei dem eingangs zum Stand der Technik angegebenen Getriebe nach DE 40 36 209 C1 trotz der dort gewählten geringen Flüssigkeitsmenge noch gegeben ist, ganz zu verzichten und hierdurch geringe Betriebstemperaturen auf eine überraschend einfache Weise zu ermöglichen.

Die wesentliche Maßnahme zur Erniedrigung der Betriebstemperatur des Getriebes besteht darin, daß die ineinandergreifenden Zahnräder an ihren Laufflächen nicht durch im Getriebeinneren frei zirkulierendes, einem Schmierölsammelraum entstammendes Schmieröl geschmiert werden. Bei einem frei zirkulierenden Schmieröl wird nämlich allein aufgrund der Flanschbewegung des Schmieröles bereits eine relativ hohe thermische Verlustleistung erzeugt. Daher sind die Zahnradflanken erfindungsgemäß mit reibungsarmen, verschleißfesten Beschichtungen überzogen, wodurch die Zahnräder ohne eine Schmierölzirkulation schmierölfrei oder zumindest schmiermittelarm dauergeschmiert mit einem hervorragenden Wirkungsgrad ineinanderkämmen können.

Die antriebs- und abtriebsseitigen Wälzlager für die Anbzw. Abtriebswelle können fettgeschmierte Lebensdauer-Wälzlager sein.

Für die Lagerung der Planetenräder auf den Planetenradbolzen sind vorteilhafterweise Nadellager eingesetzt.

Wegen einer bei der erfindungsgemäßen Getriebeausführung fehlenden Schmierung durch frei zirkulierendes, einem Schmierölsammelraum entstammendes Schmieröl sind die an- und abtriebsseitigen Dichtungen nicht mehr mit Bezug auf eine Schmieröldichtung auszulegen. Dadurch können Radialdichtungen eingesetzt werden, die lediglich äußerst geringe bis überhaupt keine Reibungsverluste erzeugen.

Als verschleißfeste, reibungsarme Laufschichten auf den Zahnrad-Laufflächen eignen sich insbesondere sogenannte PVD-Schichten (PVD = Physical Vapor Deposition) aus einem oder mehreren der Materialien Silver TIN, TICN, TIC, Wolframcarbid oder Gold TIN. Diese Schichtmaterialien sind an sich bereits bekannt und zwar sowohl bezüglich der Art, wie sie als PVD-Schichten aufzubringen sind als auch bezüglich ihrer reibungsarmen und verschleißfesten Eigenschaften. Die erfindungsgemäßen Laufschichten werden jeweils auf ein fertig bearbeitetes Teil aufgebracht.

Um in Fällen, in denen für einzelne Teile des Getriebes geringe Mengen an Dauer-Schmiermitteln vorgesehen werden, diese Mengen im Bereich der betreffenden Teile (beispielsweise der Zahnräder einerseits und der an- und abtriebsseitigen Wälzlager andererseits) dauerhaft halten zu können, sind diese Teile vorteilhafterweise in möglichst weitgehend voneinander getrennten Kammern untergebracht. Von diesen drei Kammern nimmt eine die Zahnräder und die beiden anderen jeweils ein an- bzw. abtriebsseitiges Wälzlager auf. Als anund abtriebsseitiges Wälzlager sind hier jeweils die gesamten an- bzw. abtriebsseitig erforderlichen Wälzlagermittel zu verstehen.

Ein nachstehend noch näher beschriebenes Ausführungsbeispiel der Erfindung ist in der Zeichnung dargestellt.

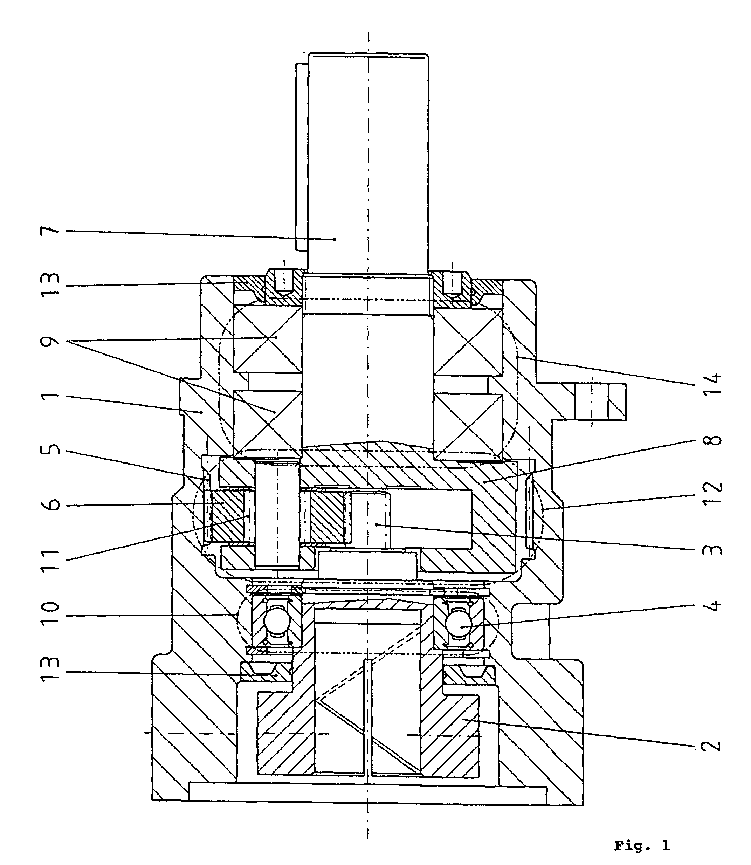

Diese zeigt in
- Fig. 1: einen Längsschnitt durch ein Planetengetriebe.

In einem schematisch dargestellten Getriebegehäuse 1 ist eine Antriebswelle 2 mit einem Antriebsritzel 3 in Wälzlagern 4 axial fixiert gelagert. Das Antriebsritzel 3 treibt über sich in einem gehäusefesten Hohlrad 5 abstützende Planetenräder 6 einen fest mit einer Abtriebswelle 7 verbundenen Umlaufträger 8 an. Die aus dem Umlaufträger 8 und der Abtriebswelle 7 bestehende Einheit ist innerhalb des Getriebegehäuses 1 über Wälzlager 9 axial fixiert gelagert.

Die tragenden Zahnflächen des Antriebsritzels 3, der Planetenräder 6 sowie des Hohlrades 5 sind jeweils mit einer der eingangs angegebenen, nach dem PVD-Beschichtungsverfahren aufgebrachten Laufflächenschicht überzogen. Es können alternativ alle Zahnräder 3, 6 und 5 oder nur die Planetenräder 6 oder nur die Planetenräder 6 und das Ritzel 3 beschichtet sein.

Die Wälzlager 4 und 9 sind fettgeschmierte Lebensdauer-Lager.

Die Zahnräder 3, 6 und 5 greifen im Getriebebetrieb ohne eine Schmierung durch zirkulierendes Schmieröl ineinander ein. Zur Schmierung kann eine minimale Menge an Fett dienen.

Die Planetenräder 6 sind auf Planetenradbolzen über Nadellager 11 gelagert.

Die An- und Abtriebswelle 2 bzw. 7 ist jeweils durch einen Labyrinthdichtring 13 gegenüber dem Getriebegehäuse 1 gedichtet. Abtriebsseitig kann alternativ auch ein Radialwellendichtring eingebaut sein.

Innerhalb des Getriebegehäuses 1 sind insgesamt drei, möglichst weitgehend voneinander getrennte Kammern 10, 12 und 14 vorgesehen. Von diesen Kammern nehmen die Kammer 12 die Zahnräder 3, 5, 6 und die Kammern 10 und 14 jeweils die Wälzlager 4 bzw. 9 auf. Die drei Kammern 10, 12 und 14 sind konstruktiv derartig voneinander getrennt, daß dort jeweils vorgesehene geringe Dauerschmiermittelmengen innerhalb des betreffenden Kammerraumes verbleiben können.

Das beschriebene Planetenzahnradgetriebe kann insbesondere mit Antriebsdrehzahlen von über 6.000 U/min wartungsfrei über die gesamte Getriebelaufzeit betrieben werden. Aufgrund der erfindungsgemäß niedrig gehaltenen Reibungsverluste erfolgt bei hohen Drehzahlen selbst bei Dauerbetrieb keine lebensdauervermindernde Erwärmung des Getriebes.

Praxisversuche mit einem erfindungsgemäßen Planetenzahnradgetriebe haben eine überraschend lange Lebensdauer bewiesen.

## Patentansprüche

1. a) Für einen langen, wartungsfreien Dauerbetrieb ausgelegtes Planetenzahnradgetriebe mit einem Antriebsritzel (3), einem Hohlrad (5) und gleichzeitig in dem Antriebsritzel (3) und dem Hohlrad (5) kämmenden Planetenrädern (6) mit hohen Drehzahlen und zu übertragenden niedrigen Drehmomenten mit Wälzlagerungen (4, 9, 11) der sich innerhalb des Getriebes drehenden Teile, bei dem
b) das Getriebe spielarm ausgelegt ist,
c) von den Zahnrädern (3, 5, 6) zumindest die Zahnflanken der Planetenräder (6) beschichtet sind,
d) die Zahnflanken-Schichten eine höhere Verschleißbeständigkeit und einen niedrigeren Reibungskoeffizienten als das jeweils zugehörige Grundmaterial besitzen,
e) die Zahnräder (3, 5, 6) schmiermittelfrei oder schmiermittelarm zahnflankenbezogen dauergeschmiert laufen,
f) alle Wälzlager (4, 9, 11) eigenständig dauergeschmiert sind,
g) innerhalb des Getriebes sich kein auch nur eines der sich bewegenden Teile (insbesondere 3, 5, 6, 4, 9, 11) während des Getriebebetriebes auch nur bereichsweise umströmendes, flüssiges Schmiermittel befindet.

2. Getriebe nach Anspruch 1,
**dadurch gekennzeichnet,**
daß zumindest die Planetenräder (6) und das Hohlrad (5) zahnflankenbeschichtet sind.

3. Getriebe nach Anspruch 2,
**dadurch gekennzeichnet**,
daß alle Zahnräder (3, 5 und 6) zahnflankenbeschichtet sind.

4. Getriebe nach einem der vorhergehenden Ansprüche,
**dadurch gekennzeichnet**,
daß die Zahnflanken-Schichten der Zahnräder (3, 5, 6) als PVD-Schichten (PVD = Physical Vapor Deposition) aus einem oder mehreren der Materialien Silver TIN, Gold TIN, TICN, TIC oder Wolframcarbid ausgebildet sind.

5. Getriebe nach einem der vorhergehenden Ansprüche,
**dadurch gekennzeichnet,**
daß innerhalb des Getriebegehäuses (1) insgesamt drei, möglichst weitgehend voneinander getrennte Kammern (10, 12, 14) vorgesehen sind, von denen die Kammer (12) die Zahnräder (3, 5, 6) und die Kammern (10, 14) jeweils die Wälzlager (4) bzw. (9) für die Antriebswelle (2) bzw. die Abtriebswelle (7) aufnehmen.

## Claims

1. a) Planetary gearing designed for long, maintenance-free continuous operation, with a driving pinion (3), an internal gear (5) and planetary gear-wheels (6) meshing simultaneously in the drive pinion (3) and the internal gear (5) at high rotational speeds and low torques for transmitting, with rolling bearings (4, 9, 11) for the parts rotating inside the gearing, in which
b) the gearing is designed with minimum play,
c) of the gear-wheels (3, 5, 6), at least the tooth faces of the planetary gear-wheels (6) are coated,
d) the tooth face coatings have a higher resistance to wear and a lower coefficient of friction than the associated base material, in each case,
e) the gear-wheels (3, 5, 6) run in a continuously lubricated manner, free of lubricant or with minimum lubrication with respect to the tooth faces,
f) all the rolling bearings (4, 9, 11) are automatically continuously lubricated,
g) no liquid lubricant, even flowing only in regions, even round only one of the moving parts (in particular 3, 5, 6, 4, 9, 11) during operation of the gearing is inside the gearing.

2. Gearing according to claim 1, characterised in that at least the planetary gear-wheels (6) and the internal gear (5) are coated on the tooth faces.

3. Gearing according to claim 2, characterised in that all the gear-wheels (3, 5 and 6) are coated on the tooth faces.

4. Gearing according to one of the preceding claims, characterised in that the tooth face coatings of the gear-wheels (3, 5, 6) are designed as PVD coatings (PVD = physical vapour deposition) made of one or more of the materials silver TIN, gold TIN, TICN, TIC or tungsten carbide.

5. Gearing according to one of the preceding claims, characterised in that a total of three chambers (10, 12, 14) separated from one another as far as possible, are provided inside the gearing housing (1), of which chambers (10, 12, 14), the chamber (12) receives the gear-wheels (3, 5, 6) and the chambers (10, 14) receive the rolling bearings (4 or 9) respectively for the drive shaft (2) or the output shaft (7).

## Revendications

1. a) Engrenage planétaire conçu pour un long service continu, sans maintenance, comprenant un pignon d'entraînement (3), une couronne de train planétaire (5) et des roues satellites (6) engrenant simultanément dans le pignon d'entraînement (3) et la couronne de train planétaire (5), à des vitesses de rotation élevées et avec de faibles couples à transmettre, avec des paliers à roulement (4, 9, 11) des pièces en rotation à l'intérieur de l'engrenage, sur lequel,
b) l'engrenage est conçu sans jeu notable,
c) sur les roues dentées (3, 5, 6), les flancs de dents des roues satellites (6), au moins, sont revêtus,
d) les couches de flancs de dents présentent une résistance à l'usure plus élevée et un coefficient de frottement plus faible que le matériau de base respectivement correspondant,
e) les roues dentées (3, 5, 6) fonctionnent sans lubrifiant ou sont lubrifiées à vie avec une faible quantité de lubrifiant quant aux flancs de dents,
f) tous les paliers à roulement (4, 9, 11) ont une lubrification à vie autonome,
g) à l'intérieur de l'engrenage, du lubrifiant liquide ne se situe en circulation, ne serait-ce que par zones, autour d'aucune, même de l'une des pièces en mouvement (en particulier 3, 5, 6, 4, 9, 11) pendant le fonctionnement de l'engrenage.

2. Engrenage suivant la revendication 1, caractérisé en ce qu'au moins les roues satellites (6) et la couronne de train planétaire (5) sont revêtues sur leurs flancs de dents.

3. Engrenage suivant la revendication 2, caractérisé en ce que toutes les roues dentées (3, 5 et 6) sont revêtues sur leurs flancs de dents.

4. Engrenage suivant l'une des revendications précédentes, caractérisé en ce que les couches des flancs des roues dentées (3, 5, 6) sont réalisées sous forme de couches PVD (PVD = Physical Vapor Deposition) composées de l'un ou de plusieurs des matériaux Silver TIN, Gold TIN, TICN, TIC, ou carbure de tungstène.

5. Engrenage suivant l'une des revendications précédentes, caractérisé en ce que trois compartiments au total (10, 12, 14), séparés le plus possible les uns des autres, sont prévus à l'intérieur de la boîte d'engrenage (1), dont le compartiment (12) reçoit les roues dentées (3, 5, 6), et les compartiments (10, 14) reçoivent respectivement les paliers à roulement (4) et/ou (9) pour l'arbre moteur (2) et/ou l'arbre de sortie (7).
